# EUROPÄISCHE PATENTSCHRIFT

(11) **EP 2 250 387 B1**
(45) Veröffentlichungstag und Bekanntmachung des Hinweises auf die Patenterteilung: **18.09.2013**
(21) Anmeldenummer: 09719621.6
(22) Anmeldetag: 06.02.2009
(51) Int. Cl.: F16D 48/02, F16D 25/12

(54) **HYDRAULISCHE STEUERUNGSANORDNUNG ZUM STEUERN EINES VARIABLEN FLUIDVOLUMENSTROMS**
HYDRAULIC CONTROL ARRANGEMENT FOR CONTROLLING A VARIABLE FLUID VOLUME FLOW
DISPOSITIF DE COMMANDE HYDRAULIQUE DESTINÉ À COMMANDER UN FLUX VOLUMIQUE VARIABLE DE FLUIDE

(30) Priorität: 14.03.2008 DE 102008000679
(43) Veröffentlichungstag der Anmeldung: 17.11.2010
(73) Patentinhaber: ZF Friedrichshafen AG, 88038 Friedrichshafen (DE)
(72) Erfinder: FRITZER, Anton, 88677 Markdorf (DE); HERRMANN, Markus, 88175 Scheidegg (DE)
(86) Internationale Anmeldenummer: PCT/EP2009/051397
(87) Internationale Veröffentlichungsnummer: WO 2009/112316

(56) Entgegenhaltungen:
- EP-A- 1 191 258
- WO-A-2004/102042
- US-A1- 2006 169 563
- US-A1- 2007 187 204
- US-B1- 6 591 958

## Beschreibung

Die vorliegende Erfindung betrifft eine hydraulische Steuerungsanordnung gemäß dem Oberbegriff des Anspruchs 1. Die erfindungsgemäße Anordnung soll insbesondere, wenn auch nicht ausschließlich, für die Kühl- bzw. Schmierölversorgung nass laufender Kupplungen geeignet sein und deshalb entsprechende spezifische Eigenschaften haben.

Fluidvolumenströme können beispielsweise mittels Fluidpumpen mit veränderlichem Fördervolumen oder mittels Fluidpumpen mit konstantem Fördervolumen und nachgeschalteten Regelventilen geregelt werden. Als Volumenstromregelventile werden im allgemeinen an eine weitgehend konstante Fluidversorgung angeschlossene, im folgenden als Steuerventile bezeichnete drosselnde Wegeventile eingesetzt, deren Funktionsprinzip darauf beruht, dass ein zugeführter Volumenstrom an einer scharfkantigen, querschnittsveränderlichen Blende mehr oder weniger stark gedrosselt und so der aus dem Steuerventil austretende Volumenstrom verändert wird. Der an der scharfkantigen Blende verursachte Druckabfall nimmt quadratisch mit zunehmendem Volumenstrom zu, demnach ist der Druckabfall bei kleinem Volumenstrom gering, er nimmt jedoch mit zunehmendem Volumenstrom schnell zu. Die Folge davon ist, dass bei kleinem Volumenstrom die Regelung sehr anfällig auf Störgrößen (beispielsweise Bauteiltoleranzen, Reibungskräfte, Toleranzen im Steuerdruck usw.) reagiert. Diese Problematik nimmt mit der Größe des maximalen Auslegungs-Volumenstroms eines Steuerventils noch zu. Bei der Kühlölversorgung von Kupplungen tritt zusätzlich das Problem auf, dass besonders bei Kälte über einen Restvolumenstrom ein schädliches Schleppmoment erzeugt wird, welches die Synchronisierung in einem nachgeordneten Getriebe erschweren kann, so dass auch in solchen Fällen die Kühlölversorgung der Kupplung bedarfsgerecht anzupassen ist.

Um einen vorgegebenen größeren Volumenstrom zu ermöglichen, gleichzeitig jedoch kleine Volumenströme möglichst exakt steuern zu können, bietet es sich an, ein Steuerventil bzw. eine Ventilschaltung zu realisieren, die über mehrere, beispielsweise zwei Arbeitsbereiche, verfügt, also beispielsweise einen unteren Volumenstrombereich sowie einen oder mehrere darüber liegende Volumenstrombereiche.

Aus der DE 103 33 236 A1 ist bereits eine hydraulische Steuerungsanordnung bekannt, welche insbesondere zur Steuerung eines Kühlmittelstroms für die Kühlung der Kupplung eines Doppelkupplungsgetriebes in einem Kraftfahrzeug dient. Sie umfasst zwei Steuerventile bzw. zwei in einem Gehäuse angeordnete Steuerkolben, wobei ein radial äußerer Steuerkolben in dem Gehäuse und ein zweiter Steuerkolben im ersten Steuerkolben axial verschiebbar geführt ist. Beide Steuerkolben werden jeweils durch den gleichen Vorsteuerdruck gegen die Kraft von jeweils zugeordneten Rückstellfedern belastet, wobei die Rückstellfedern unterschiedliche Federkonstanten aufweisen, so dass die beiden Steuerkolben bei unterschiedlichen Vorsteuerdrücken aktiviert werden. Da die Ölzuführung und Ölabführung für den inneren Steuerkolben über im äußeren Steuerkolben ausgebildete Kanäle erfolgt, sind die beiden Steuerventile nicht eigenständig, d.h., der austretende Volumenstrom ist jeweils von der jeweiligen Stellung, relativen und absoluten, beider Steuerkolben abhängig. Insgesamt ergibt sich ein konstruktiv und baulich äußerst komplexes und damit teures Bauteil. Außerdem fällt beispielsweise bei Versagen eines der beiden Steuerkolben die gesamte Steuerungsanordnung aus und muss ersetzt werden.

Aus dem Dokument US 2007/187204 A1 ist eine Vorrichtung zum Betreiben eines Anfahrelements bekannt.

Das Dokument US 2006/0169563 A1 zeigt eine Vorrichtung nach dem Oberbegriff des Anspruchs 1 zum Ansteuern der Kühlung einer Kupplung und zum Schalten einer Sicherheitsfunktion der Kupplung eines Fahrzeugs.

Vor diesem Hintergrund liegt der Erfindung die Aufgabe zugrunde, eine hydraulische Steuerungsanordnung der im Oberbegriff des Anspruchs 1 genannten Art zu schaffen, mit welcher geringe und große Volumenströme optimal regelbar sind, wobei insbesondere eine Reduzierung des Volumenstroms auf eine minimale Restmenge möglich sein soll, und die mit einfachen marktüblichen Steuerventilen realisiert werden kann. Außerdem soll es möglich sein, mit der gleichen Steuerungsanordnung auch die Aktivierung bzw. Deakti-vierung anderer Vorrichtungen auszulösen.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich eine Steuerungsfunktion, ähnlich wie sie etwa durch das oben beschriebene bekannte Steuerventil realisiert wird, einfacher und preiswerter mit eigenständigen Steuerventilen, die in geeigneter Weise vorgesteuert bzw. mit zusätzlichen Ventilen zusammengeschaltet werden, realisieren lässt, wobei zusätzlich weitere Steuerfunktionen, beispielsweise eine Volumenstromreduzierung bis auf eine minimale Restmenge, integriert werden können, und wobei bei Ausfall beispielsweise eines Steuerventils nur dieses ersetzt bzw. repariert werden muss, während die anderen Komponenten der Steuerungsanordnung weiter verwendbar sind.

Demnach geht die Erfindung gemäß den Merkmalen des Hauptanspruchs aus von einer hydraulischen Steuerungsanordnung zum Steuern eines variablen Fluidvolumenstroms zu einem Verbraucher, mit einem hydraulisch vorgesteuerten und an eine Fluidversorgung angeschlossenen Steuerventil.

Zur Lösung der gestellten Aufgabe ist dabei vorgesehen, dass ein erstes, eigenständiges Steuerventil so ausgelegt ist, dass es ohne einen Vorsteuerdruck einen vorgegebenen Anfangs-Volumenstrom liefert, indem ein Ventilschieber des Steuerventils durch eine Rückstellfeder in eine obere End-stellung geschoben wird, wodurch der Volumenstrom über eine Konstant-blende zu einer Kupplung geleitet wird, wobei dieses erste Steuerventil bei einer kontinuierlichen Erhöhung des variablen Vorsteuerdrucks den Volumenstrom über einen unteren Vorsteuerdruckbereich konstant hält. Wenigstens ein zweites eigenständiges, ebenfalls hydraulisch vorgesteuertes Steuerventil ist hierbei so ausgelegt, dass es in einem vorgegebenen Bereich des variablen Vorsteuerdrucks aktiviert wird. Bei dem wenigstens zweiten Steuerventil kann es sich um ein drittes Steuerventil handeln.

Das erste Steuerventil erfindungsgemäß so ausgelegt, dass das zweite Steuerventil in dem unteren Vorsteuerdruckbereich bei Erreichen eines Vorsteuerdruck-Grenzwertes, welcher die obere Grenze des unteren Vorsteuerdruckbereiches darstellt, in einem Schaltpunkt aktiviert wird, und eine andere Vorrichtung ein- oder ausschaltet. Der konstante Volumenstrombereich geht hierbei über den Schaltpunkt des zweiten Steuerventils hinaus, und bei einer weiteren Steigerung des Vorsteuerdrucks nimmt das Steuerventil eine solche Stellung ein, in welcher nur noch ein Volumenstrom, der durch die Spaltieckagen am Steuerventil bedingt ist, zur Kupplung fließt, so dass der Volumenstrom auf einen minimalen Volumenstrom reduziert wird.

Wie bereits vorne ausgeführt wurde, ist es bei vielen Anwendungsfällen erforderlich, den Volumenstrom zum Verbraucher ganz bzw. bis auf eine geringe Restmenge abzustellen. Das trifft beispielsweise für ein Kühlmittel für nass laufende Kupplungen zu. Deswegen ist bei der vorliegenden Erfindung vorgesehen, dass der Volumenstrom des Kühlmittels ganz bzw. bis auf eine geringe Restmenge reduziert werden kann. Bei der minimalen Restmenge handelt es sich entweder um die Fluidmenge, welche durch Spaltleckagen zum Verbraucher fließen kann, oder um eine definierte Mindestmenge, die beispielsweise bei einer Kupplung eine Mindestkühlung bzw. Mindestschmierung gewährleisten soll. Diese Restmenge soll dann jedenfalls so klein sein, dass schädliche Schleppmomente bei Kupplungen zumindest weitgehend vermieden werden.

Zudem kann mit der Steuerungsanordnung gemäß der Erfindung auch erreicht werden, dass bei nicht oder noch nicht ausreichend vorhandenem Vorsteuerdruck dem Verbraucher bzw. der Kupplung bereits ein, wenn auch vergleichsweise geringer, Anfangs-Volumenstrom Q1 an Kühlfluid zugeführt wird, welches beispielsweise unmittelbar nach den Start eines Fahrzeugs von Vorteil sein kann.

Es ist möglich, dass der Bereich des minimalen Volumenstroms durch eine Variation der Überdeckungsverhältnisse am Ventilschieber des Steuerventils in seiner Breite über einen bestimmten Vorsteuerdruckbereich variierbar ist.

In einer vorteilhaften Ausführung ist das Steuerventil derart ausgebildet, dass bei einem weiteren Anstieg des Vorsteuerdrucks die Öffnung zu einer Hauptleitung zur Versorgung der Kupplung geöffnet und ein variabler Volumenstrom zur Kupplung kontinuierlich geregelt wird.
dass dem Steuerventil ein Fluidkühler vorgeschaltet ist und dass das Steuerventil eine weitere Steuerkante erweitert ist, über die ein Fluidvolumenstrom über einen Bypass in Richtung eines Vorratstanks leitbar ist, so dass der Fluidkühler einen vorgegebenen Mindestdurchsatz über alle Betriebsbereiche des Steuerventils hat.

Die erfindungsgemäße Steuerungsanordnung ermöglicht es darüber hinaus, wenigstens ein weiteres eigenständiges Steuerventil zu aktivieren, welches beispielsweise einen Notbetrieb einer anderen Vorrichtung bzw. eines anderen Verbrauchers oder des gleichen Verbrauchers (Kupplung) auslösen kann, wie anhand von mehreren Ausführungsbeispielen noch genauer dargelegt wird.

In einer bevorzugten Ausführungsform der Erfindung ist vorgesehen, dass das erste Steuerventil so ausgelegt ist, dass es bei fehlendem Vorsteuerdruck durch den Fluidversorgungsdruck selbst in eine Steuerstellung eingeregelt wird, bei der es einen vorgegebenen Anfangs-Volumenstrom zum Verbraucher liefert. Dazu wird der Fluidversorgungsdruck auf eine Steuerfläche des Ventilschiebers geleitet, derart, dass dieser gegen die Kraft einer Rückstellfeder in eine von der Federkraft abhängige Stellung eingestellt wird, bei der ein vorgegebener Volumenstrom zum Verbraucher fließt.

Falls in der Fluidversorgungsleitung des ersten Steuerventils ein Fluidkühler vorgesehen ist, dann ist gemäß einer weiteren Ausgestaltung der Erfindung das erste Steuerventil so ausgelegt, dass es bei fehlendem Vorsteuerdruck auf jeden Fall einen vorgegebenen Bypass-Volumenstrom zu einem Fluid-Vorratstank aufrechterhält, damit der Fluidkühler in jedem Arbeitsbereich genügend Durchsatz hat. Dieser in den Fluid-Vorratstank geleitete Volumenstrom kann mit zunehmender zum Verbraucher geleiteter Fluidmenge kontinuierlich abnehmen, da mit letzterer ein ausreichender Durchsatz durch den Fluidkühler gewährleistet ist.

Zudem ist wenigstens ein weiteres Steuerventil vorgesehen, welches beispielsweise in einem Anfangsbereich des Vorsteuerdrucks durch diesen jeweils zugeordneten Vorsteuerdruck aktiviert wird. Durch diese Aktivierung des zweiten Steuerventils lässt sich beispielsweise bei einem Störfall der Notbetrieb einer anderen Vorrichtung auslösen. Auf diese Weise kann der Vorsteuerdruck sowohl für eine bedarfsgerechte Regelung, beispielsweise der Kühlölversorgung einer Fahrzeugkupplung, als auch für die Steuerung bzw. Notfall-Aktivierung einer anderen Fahrzeugvorrichtung genutzt werden.

Die Erfindung lässt sich anhand mehrerer Ausführungsbeispiele weiter erläutern. Dazu ist der Beschreibung eine Zeichnung beigefügt. In dieser zeigt
- Fig. 1: eine nicht erfindungsgemäße hydraulische Steuerungsanordnung mit einem ersten Steuerventil und einem Abschaltventil, wobei ein zweites Steuerventil im oberen Endbereich des Vorsteuerdrucks aktiviert werden kann,
- Fig. 2: eine nicht erfindungsgemäße hydraulische Steuerungsanordnung mit einem ersten Steuerventil mit Abschaltfunktion, wobei ein zweites Steuerventil im Anfangsbereich des Vorsteuerdrucks aktiviert werden kann,
- Fig. 3: eine nicht erfindungsgemäße hydraulische Steuerungsanordnung mit einem ersten Steuerventil, einem Boostventil und einem Abschaltventil, wobei ein zweites Steuerventil in einem Anfangsbereich des Vorsteuerdrucks aktiviert wird,
- Fig. 4: eine nicht erfindungsgemäße hydraulische Steuerungsanordnung mit einem ersten Steuerventil und einer direkt auf dieses wirkenden Abschaltfunktion, wobei ein zweites Steuerventil im Anfangsbereich des Vorsteuerdrucks aktiviert wird,
- Fig. 5: eine nicht erfindungsgemäße hydraulische Steuerungsanordnung mit einem ersten Steuerventil und einer direkt auf dieses wirkenden Abschaltfunktion, wobei ein zweites Steuerventil im Endbereich des Vorsteuerdrucks aktiviert wird,
- Fig. 6: eine erfindungsgemäße hydraulische Steuerungsanordnung mit einem ersten Steuerventil mit Abschaltfunktion, wobei ein zweites Steuerventil im Anfangsbereich des Vorsteuerdrucks aktiviert wird, und
- Fig. 7: eine erfindungsgemäße hydraulische Steuerungsanordnung mit einem ersten Steuerventil mit Abschaltfunktion, wobei ein zweites Steuerventil im Anfangsbereich des Vorsteuerdrucks aktiviert wird.

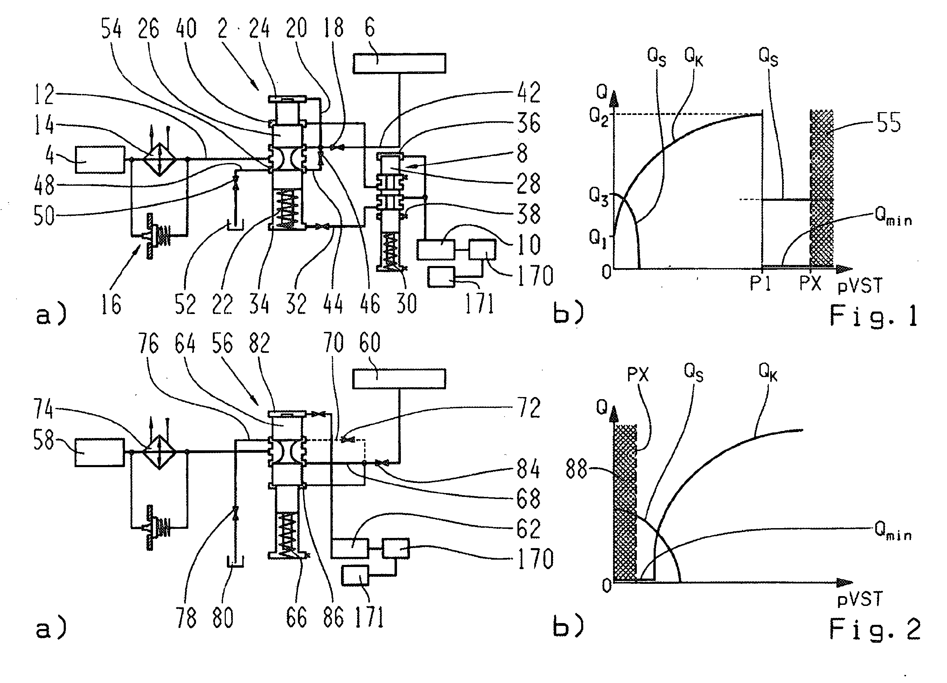

Fig. 1 zeigt demnach eine hydraulische Steuerungsanordnung zum Steuern eines variablen Fluidvolumenstroms zu einem Verbraucher, im vorliegenden Fall beispielhaft zum Steuern eines Kühlölstroms zu einer nass laufenden Kupplung. Die Steuerungsanordnung umfasst ein erstes Steuerventil 2, welches an eine Fluidversorgung 4, beispielsweise eine Fluidpumpe, angeschlossen ist, und von welchem ein Fluidvolumenstrom zu einer Kupplung 6 gesteuert wird. Das erste Steuerventil 2 ist ein Wegeventil mit einem Steuerkolben, welcher je nach seiner Stellung verschiedene Zulauf- und Ablaufquerschnitte variabel öffnet bzw. schließt, wie an sich bekannt ist.

Dem ersten Steuerventil 2 ist ein Abschaltventil 8 zugeordnet, welches von einem beispielsweise durch ein Vorsteuerventil 10 gelieferten Vorsteuerdruck pVST beaufschlagt wird und diesen auch an das erste Steuerventil 2 weiterleitet, wie noch beschrieben wird.

In der Fluidversorgungsleitung 12 ist ein Fluidkühler 14 vorgesehen, in welchem das beispielsweise in einem der Kupplung zugeordneten Getriebe erwärmte Fluid gekühlt wird. Der Fluidkühler 14 kann über ein Bypass-Ventil 16 umgangen werden.

Das Vorsteuerventil 10 versorgt auch ein zweites Steuerventil 170 über eine Druckleitung mit dem Vorsteuerdruck pVST, wobei das zweite Steuerventil 170 bei Erreichen vorbestimmter oberer oder unterer Grenzwerte PX des Vorsteuerdrucks pVST das Ein- oder Ausschalten anderer Verbraucher 171 bzw. Fahrzeugvorrichtungen auslöst. So kann beispielsweise eine Notbetriebsfunktion für einen Kupplungsaktuator eingeschaltet werden, gemäß welcher dieser Kupplungsaktuator die Fahrzeugkupplung geschlossen hält, solange die Drehzahl des Antriebsmotors und/oder die Fahrgeschwindigkeit vorbestimmte untere Grenzwerte nicht unterschreitet.

Die Funktionsweise der in Fig. 1 dargestellten hydraulischen Steuerungsanordnung ist zudem folgende:

Ohne einen Vorsteuerdruck pVST fließt das im Fluidkühler 14 gekühlte Fluid durch das erste Steuerventil 2 sowie durch die diesem nachgeschaltete Blende 18 in Richtung zur Kupplung 6 und verursacht an der Blende 18 einen Staudruck, der über eine Leitung 20 auf den der Rückstellfeder 22 abgewandten Druckraum 24 des ersten Steuerventils 2 geleitet wird. Der im Druckraum 24 wirkende Druck übt auf den Ventilschieber 26 des ersten Steuerventils 2 eine Kraft entgegen der Kraft der Rückstellfeder 22 aus, so dass der Ventilschieber 26 den Ablaufquerschnitt reduziert und einen Anfangs-Volumenstrom entsprechend der Federkraft einregelt. Dieser Volumenstrom ist in dem rechts von der Steuerungsanordnung dargestellten Diagramm 1 b mit Q₁ bezeichnet. Bei diesem Betriebszustand nimmt das Abschaltventil 8 die in der Fig. 1 dargestellte Stellung ein, bei der dessen Ventilschieber 28 durch die zugeordnete Rückstellfeder 30 in die obere Endstellung eingestellt ist. Dabei ist das den Vorsteuerdruck pVST liefernde Vorsteuerventil 10 über das Abschaltventil 8 und die Verbindungsleitung 32 auch mit dem Federraum 34 des Steuerventils 2 verbunden.

Wird nun der Vorsteuerdruck pVST kontinuierlich erhöht, so wirkt dieser beim ersten Steuerventil 2 federkraftunterstützend und erhöht damit den Fluidvolumenstrom zur Kupplung 6 über die Blende 18. Zugleich wirkt dieser Vorsteuerdruck pVST auch in einem der Rückstellfeder 30 abgewandten Druckraum 36 des Abschaltventils 8. Durch eine entsprechende Auslegung der Rückstellfeder 30 kann erreicht werden, dass beim Überschreiten eines vorgegebenen, einem Abschaltdruck P1 entsprechenden maximalen Fluidvolumenstroms zur Kupplung 6 der Ventilschieber 28 des Abschaltventils 8 entgegen der Kraft der Rückstellfeder 30 nach unten verschoben wird, derart, dass die Verbindung des Vorsteuerdrucks pVST über die Verbindungsleitung 32 zum Federraum 34 des Steuerventils unterbrochen und dieser über den Tankanschluss 38 zum Fluid-Vorratstank hin entlüftet wird.

Parallel dazu wird über das Abschaltventil 8 eine Verbindung des Vorsteuerdrucks pVST zu einem zweiten, der Rückstellfeder 22 abgewandten Druckraum 40 geschaffen. Der Vorsteuerdruck pVST übt dort über die zugeordnete Kreisringfläche des Ventilschiebers 26 eine Kraft auf diesen Ventilschieber 26 aus, die größer als die Kraft der Rückstellfeder 22 ist, so dass der Ventilschieber 26 in die federseitige Endstellung verstellt wird, bei der der Fluidvolumenstrom über die Leitung 42 zur Kupplung 6 hin unterbrochen wird. Über eine Leitung 44 und eine Blende 46 kann bei abgeschaltetem Fluidvolumenstrom jedoch eine Mindestmenge Qₘᵢₙ des Fluids zur Kupplung 6 zum Zweck der Kühlung bzw. Schmierung durchgeleitet werden. In diesem Arbeitspunkt wird über eine Leitung 48 und eine Bypass-Blende 50 zusätzlich Fluid in einen Vorrats-Tank 52 bzw. Sumpf geleitet, damit der Fluidkühler 14 genügend Fluiddurchsatz beibehält, wie noch erläutert wird.

Das in der Fig. 1 rechts von der Steuerungsanordnung dargestellte Diagramm 1 b zeigt den zur Kühlung bzw. Schmierung der Kupplung 6 dienenden Fluidvolumenstrom Q_{K} in Abhängigkeit vom Vorsteuerdruck pVST, beginnend mit der Fluidmenge bzw. dem Anfangs-Volumenstrom Q₁ bei fehlendem pVST bis zur Fluidmenge bzw. dem End-Volumenstrom Q₂ im Augenblick des Abschaltens bei einem Vorsteuerdruck pVST = P1. Bei Betätigung des Abschaltventils 8 fällt der Fluidvolumenstrom auf eine einem Leckagestrom oder einer vorgegebenen Restmenge entsprechende Fluidmenge Qₘᵢₙ ab.

Nachdem das Abschaltventil 8 betätigt wurde, kann der vom Vorsteuerventil 10 gelieferte Vorsteuerdruck pVST dazu benutzt werden, das zweite Steuerventil 170 zu betätigen, welches gemäß dem in Fig. 1 gezeigten Beispiel oberhalb des Vorsterdrucks P1 bei einem Vorsteuerdruck PX aktiviert wird und das Ein- oder Ausschalten einer anderen Vorrichtung bzw. eines anderen Kühlfluid-Verbrauchers auslösen kann.

Wie bereits weiter vorne kurz dargelegt wurde, wird in vielen Anwendungsfällen das dem ersten Steuerventil 2 zugeleitete Fluid über einen vorgeschalteten Fluidkühler 14 geleitet, nämlich beispielsweise dann, wenn das Fluid zuvor ein zugeordnetes Getriebe passiert hat und dort erwärmt wurde. Die dem Fluidkühler 14 durchlaufende Fluidmenge ist deshalb im allgemeinen Fall an die der Kupplung 6 zugeführte Fluidmenge gekoppelt. Das kann dazu führen, dass zur Absenkung der Getriebetemperatur zwangsläufig die Kupplungskühlung aktiviert werden muss, wodurch sich in bestimmten Betriebszuständen der Wirkungsgrad des Getriebes und somit der Treibstoffverbrauch unnötig verschlechtern (Schleppverluste an den drehenden Kupplungsteilen) sowie ein höherer Lufteintrag ins Fluid stattfindet, da eine hohe Fluidmenge durch die drehende Kupplung gefördert wird. Dies ist z.B. bei Konstantfahrt in einem Gang auf der Autobahn oder Landstraße der Fall, wenn zwar keine Reibungswärme in der Kupplung entsteht, die im Getriebe erzeugte Wärme jedoch die Fluidtemperatur ansteigen lässt.

Um den Volumenstrom zur Kupplung reduzieren zu können, ohne den Volumenstrom durch den Fluidkühler zu verringern, ist die Steuerungsanordnung mit einer Bypass-Funktion ausgestattet, mittels derer bei jeder Stellung des ersten Steuerventils 2, also unabhängig von der der Kupplung zugeführten Fluidmenge, ein Mindest-Volumenstrom den Fluidkühler passiert. Dazu wird zusätzlich ein Fluid-Volumenstrom in der Vorratstank 52 geleitet. Dieser ist in den Diagrammen der Figuren 1 bis 5 und 7 mit Q_{S} bezeichnet. Wie beispielsweise in Fig. 1 zu erkennen ist, fließt bei fehlendem Vorsteuerdruck pVST die Fluidmenge Q₃, die sodann bei zunehmendem Vorsteuerdruck pVST und damit bei zunehmender Fluidmenge zur Kupplung 6 kontinuierlich auf Null abnimmt, da die zur Leitung 48 gehörende Steuerkante 54 zunehmend geschlossen wird. Demnach fließt über den Fluidkühler 14 stets die Fluidmenge, die sich aus der Addition der Werte von Q_{K} und Q_{S} ergibt. Nach dem Abschalten des ersten Steuerventils 2 ist die Steuerkante 54 wieder ganz geöffnet, so dass der Volumenstrom Q_{S} wieder etwa den Wert Q₃ hat.

Fig. 2 zeigt eine Steuerungsanordnung, die gegenüber der in Fig. 1 dargestellten Steuerungsanordnung vereinfacht ausgebildet ist und mit weniger Bauteilen auskommt. Sie umfasst ein erstes Steuerventil 56, welches an eine Fluidversorgung 58 angeschlossen ist, und als Verbraucher beispielsweise wiederum eine Kupplung 60. Ohne einen von einem Vorsteuerventil 62 gelieferten Vorsteuerdruck pVST wird der Ventilschieber 64 des Steuerventils 56 durch die Rückstellfeder 66 in die obere Endstellung geschoben, wodurch die Anschlussleitung 68 zur Kupplung 60 geschlossen wird. Über Spaltleckagen fließt dennoch eine kleine Fluidmenge Qₘᵢₙ zur Kupplung 60, wie das rechts von der Steuerungsanordnung dargestellte Diagramm 2b erkennen lässt. Wie bei der in Fig. 1 gezeigten Variante ist es auch hier möglich, über eine Leitung 70 und eine Blende 72 eine definierte minimale Fluidmenge Qₘᵢₙ zur Kupplung 60 fließen zu lassen. Damit ein ausreichender Fluiddurchsatz durch den dem Steuerventil 56 vorgeschalteten Fluidkühler 74 aufrechterhalten bleibt, wird wie bei Fig. 1 über eine Leitung 76 und eine zugeordnete Bypass-Blende 78 Fluid in den Vorrats-Tank 80 geleitet, wie im Diagramm die Kurve Q_{S} zeigt.

Durch Erhöhen des Vorsteuerdrucks pVST wird über den der Rückstellfeder 66 abgewandten Druckraum 82 der Ventilschieber 64 entgegen der Kraft der Rückstellfeder 66 verschoben. Der Anschluss in Richtung zum Vorratstank 80 wird dabei kontinuierlich geschlossen, d.h., die Fluidmenge Q_{S} kontinuierlich auf Null reduziert. Gleichzeitig öffnet das Steuerventil 56 den Weg zur Anschlussleitung 68 kontinuierlich, womit der Fluidstrom Q_{K} zur Kupplung 60 kontinuierlich ansteigt. Durch eine entsprechende Auslegung der Steuerkanten-überdeckung zur Leitung 76 einerseits und zur Anschlussleitung 68 andererseits kann die Überschneidung der beiden Volumenströme Q_{S} bzw. Q_{K} so ausgelegt werden, dass über den gesamten Betriebsbereich des Steuerventils 56 eine bestimmte Fluidmenge über den Fluidkühler 74 geleitet wird. Über den Fluidstrom zur Kupplung 60 wird an der in der Anschlussleitung 68 vorgesehenen Blende 84 ein Staudruck erzeugt, der als hydraulische Größe zur Regelung der Durchflussmenge herangezogen wird, indem dieser Staudruck in einen Druckraum 86 geleitet wird, wo er federkraftunterstützend auf den Ventilschieber 64 wirkt.

Auch bei dieser Ausführungsform der Steuerungsanordnung kann der von dem Vorsteuerventil 62 gelieferte Vorsteuerdruck pVST zur Betätigung eines zweiten Steuerventils 170 verwendet werden, welches hier in einem Anfangsbereich des Vorsteuerdrucks pVST bei Erreichen des Vorsteuerdrucks PX aktiviert wird und eine andere Vorrichtung 171 ein- oder ausschaltet. Dabei ist es an sich unerheblich und zur freien Verfügung für den jeweiligen Anwendungsfall gestellt, ob der Vorsteuerdruck PX von großen oder von kleinen Druckwerten des Vorsteuerdrucks pVST her kommend erreicht wird.

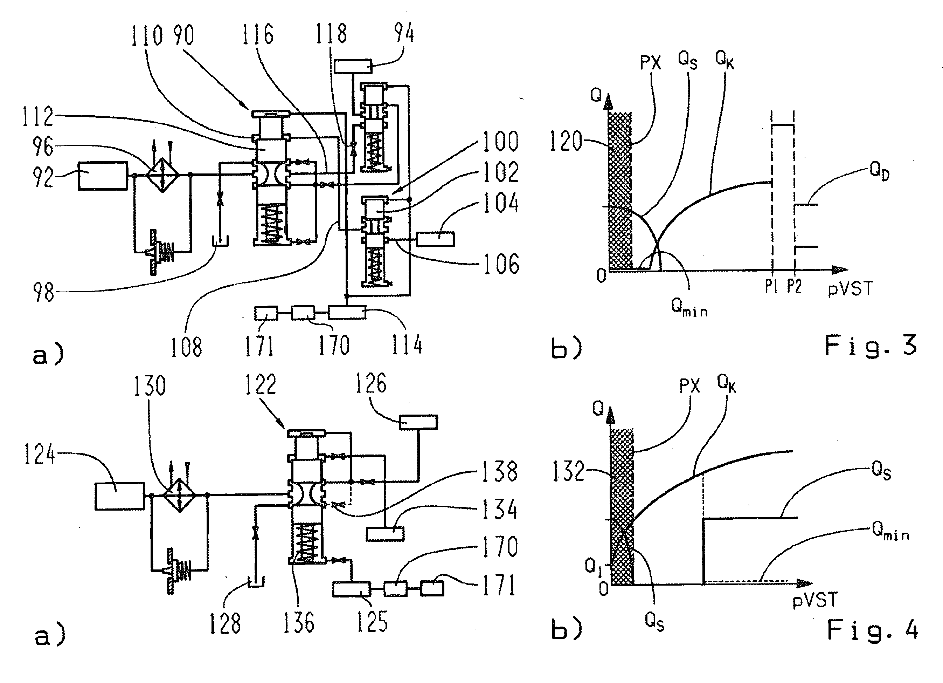

Fig. 3 zeigt eine Steuerungsanordnung, deren Funktionsweise der Steuerungsanordnung der Fig. 2 ähnlich ist. Sie umfasst ein erstes Steuerventil 90, welches an eine Fluidversorgung 92 angeschlossen ist, eine vom Steuerventil 90 versorgte Kupplung 94, einen dem Steuerventil 90 vorgeschalteten Fluidkühler 96 und einen Vorratstank 98 für die Bypass-Funktion, wie bereits beschrieben wurde. Das Steuerventil 90 ist für einen gegenüber der Fig. 2 geringeren Volumenstrom Q_{K} zur Kupplung 94 ausgelegt, wie insbesondere das rechts von der Steuerungsanordnung dargestellte Diagramm 3b erkennen lässt. Dadurch ergibt sich aufgrund des günstigeren Verhältnisses des Fluidvolumenstroms Q_{K} zum Vorsteuerdruck pVST eine bessere Regelbarkeit, wie weiter vorne bereits ausgeführt wurde. Um dennoch in bestimmten Betriebssituationen im oberen Volumenstrombereich einen größeren Volumenstrom zur Kupplung 94 bereitstellen zu können, kann über ein zusätzliches Boostventil 100 bei Erreichen eines Vorsteuerdrucks pVST = P1 die Regelfunktion des Steuerventils 90 abgeschaltet und der Fluiddurchfluss durch dieses Steuerventil maximiert werden. Bei Erreichen des Vorsteuerdrucks pVST = P1 wird der Ventilschieber 102 des Boostventils 100 nach unten in Richtung zur Ventilrückstellfeder verschoben, wobei ein zusätzlicher Steuerdruck 104 über die Leitungen 106 und 108 einem Druckraum 110 des Steuerventils 90 zugeleitet wird, welcher den Ventilschieber 112 entgegen der Kraft der zugeordneten Ventilrückstellfeder in seine untere Endstellung verstellt.

Bei einer weiteren Erhöhung des vom Steuerventil 114 gelieferten Vorsteuerdrucks auf einen Wert P2 wird das Steuerventil 90 abgeschaltet, wobei jedoch über eine Anschlussleitung 116 und eine in dieser angeordnete Blende 118 eine definierte Fluidmenge Q_{D} zur Kupplung 94 geleitet werden kann.

Die Bypass-Funktion entspricht der im Zusammenhang mit der Fig. 2 beschriebenen Funktion und braucht deshalb nicht nochmals erläutert zu werden. Mit 120 ist wiederum ein niedriger Bereich des Vorsteuerdrucks pVST bezeichnet, ab dessen Erreichen (Vorsteuerdruck-Grenzwert PX) das zweite Steuerventil 170 aktiviert wird, welches eine andere Vorrichtung 171 ein- oder ausschaltet.

Fig. 4 zeigt eine weitere Variante einer Steuerungsanordnung mit einem ersten Steuerventil 122, welches an eine Fluidversorgung 124 angeschlossen ist, und welches einen Fluidvolumenstrom zu einer Kupplung 126 steuert.

In bestimmten Anwendungsfällen kann es erwünscht sein, den kompletten vom Vorsteuerventil 125 gelieferten Vorsteuerdruckbereich zur Regelung des Fluidvolumenstroms zur Kupplung 126 auszunützen. Bei einem beispielsweise gegenüber den vorgenannten Varianten vergrößerten Vorsteuerdruckbereich ist eine feinere Regelung des Volumenstroms Q_{K} zur Kupplung 126 möglich, d.h., der Volumenstrom lässt sich exakter dosieren. Über eine Bypass-Funktion, ähnlich den zuvor beschriebenen Funktionen, wird wieder eine bestimmte Fluidmenge Q_{S} in den Vorratstank 128 abgeleitet, um einen bestimmten Fluiddurchsatz durch den Fluidkühler 130 zu gewährleisten.

Ohne einen Vorsteuerdruck fließt ein minimaler Fluidstrom Q₁ zur Kupplung 126, welcher nicht unter eine vorgegebene Mindestmenge abgesenkt werden kann. Mit zunehmendem Vorsteuerdruck pVST erhöht sich der Volumenstrom Q_{K} zur Kupplung 126. Es entsteht daher das Problem, dass der Volumenstrom Q_{K} zur Kupplung 126 nicht unter einen bestimmten Wert Q₁ reduziert werden kann. Dies kann weitgehend dadurch vermieden werden, dass das erste Steuerventil 122 über einen Abschaltdruck 134 entgegen der Kraft der Rückstellfeder 136 in die federseitige Endstellung verschoben wird. In dieser Stellung kann über eine einstellbare Blende 138 eine bestimmte Fluidmenge Qₘᵢₙ zur Kupplung 126 zum Zweck einer Kühlung bzw. Schmierung durchgeleitet werden. Der untere Bereich 132 des Vorsteuerdrucks pVST kann wie bereits geschildert zur Ansteuerung des zweite Steuerventils 170 genutzt werden, welches eine andere Vorrichtung 171 ein- oder ausschaltet. Die Aktivierung des zweiten Steuerventils 170 erfolgt auch hier bei Erreichen des Vorsteuerdruck-Grenzwertes PX.

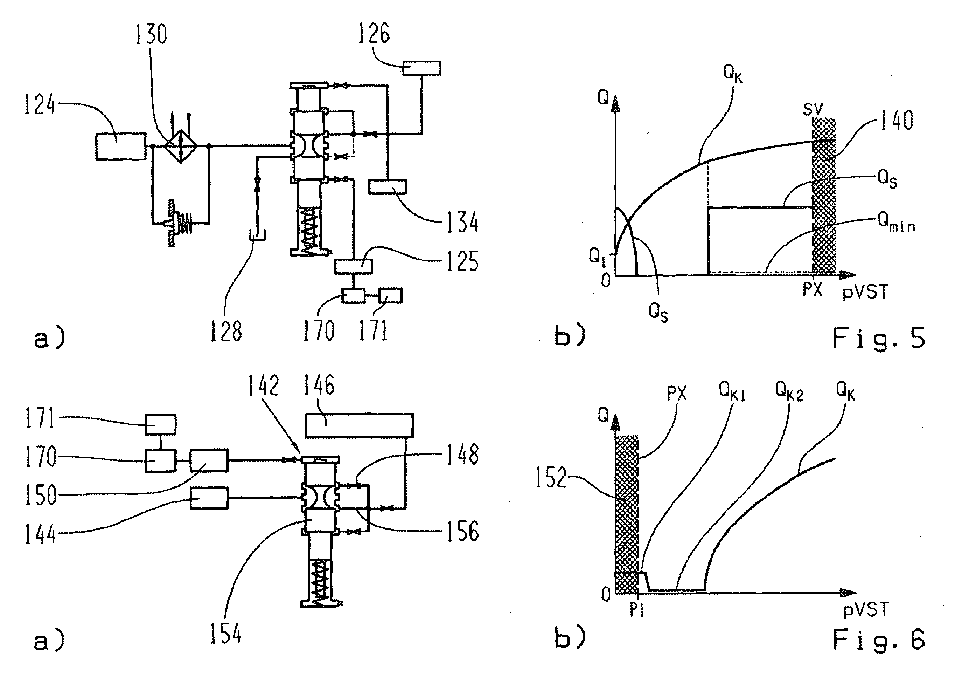

Fig. 5 zeigt eine gegenüber der Fig. 4 etwas modifizierte Variante einer Steuerungsanordnung, bei der im Gegensatz zu dieser ein Endbereich 140 des Vorsteuerdrucks pVST mit seinem Vorsteuerdruck-Grenzwertes PX zur Ansteuerung des zweiten Steuerventils 170 genutzt werden kann, welches eine andere Vorrichtung 171 ein- oder ausschaltet. Im Diagramm 5b ist dies dargestellt und auch durch das Bezugszeichen SV für die Tätigkeit eines Schaltventils angedeutet. Eine Beschreibung der übrigen Funktionen erübrigt sich, da sie den bereits zuvor beschriebenen Funktionen entsprechen.

Fig. 6 zeigt eine besonders einfache Ausgestaltung einer Steuerungsanordnung gemäß der Erfindung, die ebenfalls die vorne beschriebene Aufgabe der Erfindung löst. Sie umfasst ein erstes Steuerventil 142, welches an eine Fluidversorgung 144 angeschlossen ist, und eine Kupplung 146, deren Kühlung bzw. Schmierung über das Steuerventil 142 geregelt wird. Für bestimmte Anwendungsfälle reicht es aus, einen bestimmten konstanten Volumenstrom in Richtung zur Kupplung 146 zu schicken, diesen jedoch möglichst genau und weitestgehend unabhängig von Toleranzen in der Ansteuerung zu dosieren. Dies wird bei der Ausgestaltung gemäß der Fig. 6 mittels einer Konstantblende 148 bewerkstelligt, wie im folgenden erläutert wird.

Bei einem niedrigen vom Vorsteuerventil 150 gelieferten Vorsteuerdruck pVST wird der Volumenstrom Q_{K1} über die Konstantblende 148 zur Kupplung geleitet. Die Höhe dieses Volumenstroms Q_{K1} hängt nur von den Toleranzen dieser Konstantblende 148 ab und schwankt in einem nur geringen Bereich. Wenn man den Volumenstrom Q über einen größeren, unteren Vorsteuerdruckbereich 152 konstant hält, dann kann mit diesem (niedrigen) Vorsteuerdruck pVST im Sinne einer Steuerung noch das zweite Steuerventil 170 betätigt werden, welches bei Erreichen des Vorsteuerdruck-Grenzwertes PX aktiviert wird und eine andere Vorrichtung 171 ein- oder ausschaltet. Dabei ist es wichtig, dass der konstante Volumenstrombereich Q_{K1} über den Schaltpunkt P1 des zweiten Steuerventils 170 hinausgeht.

Wenn der Vorsteuerdruck pVST weiter ansteigt, wird der Volumenstrom Q auf ein Minimum Q_{K2} reduziert. Es fließt dann nur noch die Fluidmenge zur Kupplung 146, die durch Spaltleckagen am Steuerventil 142 bedingt ist. Durch Variation der Überdeckungsverhältnisse am Ventilschieber 154 des Steuerventils 142 kann der Bereich des minimalen Volumenstroms in der Breite variiert werden.

Bei einem weiteren Anstieg des Vorsteuerdrucks pVST wird dann die Öffnung zur Hauptleitung 156 zur Versorgung der Kupplung 146 geöffnet und der Volumenstrom Q_{K} zur Kupplung 146 kontinuierlich geregelt, wie bereits erläutert wurde.

Anhand des schematischen, geregelten Volumenstromverlaufs Q_{K} im Diagramm 6b kann man erkennen, dass dieser im Bereich kleiner Volumenströme sehr steile Gradienten besitzt, d.h., kleine Toleranzschwankungen des Vorsteuerdrucks ändern die zur Kupplung 146 strömende Fluidmenge in erheblichem Maße und sind damit praktisch kaum zu gebrauchen. Abhilfe schafft in diesem Bereich die vorgeschlagene Lösung mit der Konstantblende. Für kleine Fluidmengen wird der Bereich mit konstantem Volumenstrom Q_{K1} angesteuert. Möchte man den Volumenstrom zur Kupplung 146 erhöhen, dann geht man in den variablen Volumenstrombereich Q_{K} über. Bei höheren Fluidmengen verläuft der Volumenstrom dann mit flacheren Gradienten und kann dem entsprechend besser geregelt werden.

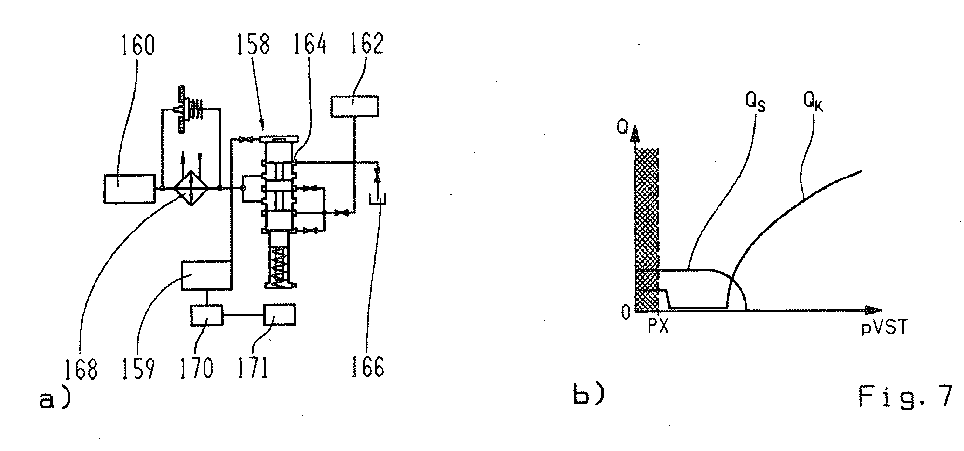

Fig. 7 zeigt eine weitere Variante ähnlich der Fig. 6 und umfasst ein erstes Steuerventil 158, welches an eine Fluidversorgung 160 angeschlossen ist, sowie eine Kupplung 162, deren der Kühlung oder Schmierung dienender Volumenstrom Q_{K} von dem Steuerventil 158 mittels des Vorsteuerdrucks 159 gesteuert wird. Das Steuerventil 158 ist gegenüber dem Steuerventil 142 der Fig. 6 um eine weitere Steuerkante 164 erweitert, über die ein Fluidvolumenstrom Q_{S} über einen Bypass in Richtung eines Vorratstanks 166 geleitet werden kann, so dass der dem Steuerventil 158 vorgeschaltete Fluidkühler 168 stets einen vorgegebenen Mindestdurchsatz über alle Betriebsbereiche des Steuerventils 158 hat. Auch hier dient das zweite Steuerventil 170 bei Unterschreiten eines niedrigen Vorsteuerdruck-Grenzwertes PX oder knappen Überschreitens des Vorsteuerdrucks pVST = 0 dem Ein- oder Ausschalten einer anderen Vorrichtung 171.

### Bezugszeichen

- 2: Erstes Steuerventil
- 4: Fluidversorgung
- 6: Kupplung
- 8: Abschaltventil
- 10: Vorsteuerventil
- 12: Fluidversorgungsleitung
- 14: Fluidkühler
- 16: Bypass-Ventil
- 18: Blende
- 20: Leitung
- 22: Rückstellfeder
- 24: Druckraum
- 26: Ventilschieber
- 28: Ventilschieber
- 30: Rückstellfeder
- 32: Verbindungsleitung
- 34: Federraum
- 36: Druckraum
- 38: Tankanschluss
- 40: Druckraum
- 42: Leitung
- 44: Leitung
- 46: Blende
- 48: Leitung
- 50: Bypass-Blende
- 52: Vorratstank
- 54: Steuerkante
- 55: Volumenstrombereich
- 56: Erstes Steuerventil
- 58: Fluidversorgung
- 60: Kupplung
- 62: Vorsteuerventil
- 64: Ventilschieber
- 66: Rückstellfeder
- 68: Anschlussleitung
- 70: Leitung
- 72: Blende
- 74: Fluidkühler
- 76: Leitung
- 78: Bypass-Blende
- 80: Vorratstank
- 82: Druckraum
- 84: Blende
- 86: Druckraum
- 88: Oberer Volumenstrombereich
- 90: Erstes Steuerventil
- 92: Fluidversorgung
- 94: Kupplung
- 96: Fluidkühler
- 98: Vorratstank
- 100: Boostventil
- 102: Ventilschieber
- 104: Steuerdruck
- 106: Leitung
- 107: Leitung
- 110: Druckraum
- 112: Ventilschieber
- 114: Vorsteuerventil
- 116: Anschlussleitung
- 118: Blende
- 120: Oberer Volumenstrombereich
- 122: Erstes Steuerventil
- 124: Fluidversorgung
- 125: Vorsteuerventil
- 126: Kupplung
- 128: Vorratstank
- 130: Fluidkühler
- 132: Oberer Volumensteuerbereich
- 134: Abschaltdruck
- 136: Rückstellfeder
- 138: Einstellbare Blende
- 140: Volumenstrombereich
- 142: Erstes Steuerventil
- 144: Fluidversorgung
- 146: Kupplung
- 148: Konstantblende
- 150: Vorsteuerventil
- 152: Oberer Volumenstrombereich
- 154: Ventilschieber
- 156: Hauptleitung
- 158: Erstes Steuerventil
- 159: Steuerdruck
- 160: Fluidversorgung
- 162: Kupplung
- 164: Steuerkante
- 170: Zweites Steuerventil
- 171: Weitere Vorrichtung, angesteuert von 170
- pVST: Vorsteuerdruck
- PX: Vorsteuerdruck-Grenzwert
- P1, P2: Vorsteuerdrücke
- Q: Volumenstrom
- Qₘᵢₙ: Mindest-Volumenstrom
- Q₁: Anfangs-Volumenstrom
- Q₂: End-Volumenstrom
- Q₃: Fluidmenge
- Q_{K}: Kontinuierlich ansteigender Volumenstrom
- Q_{K1}: Konstanter Volumenstrombereich
- Q_{K2}: Konstanter Volumenstrombereich
- Q_{S}: Bypass-Volumenstrom
- Q_{D}: Definierte Fluidmenge
- SV: Schaltventil

## Patentansprüche

1. Hydraulische Steuerungsanordnung zum Steuern eines variablen Fluidvolumenstroms zu einem als Kupplung (146) ausgebildeten Verbraucher, mit einem hydraulisch vorgesteuerten, an eine Fluidversorgung (144) angeschlossenen Steuerventil (142), welches als erstes, eigenständiges Steuerventil (142) so ausgelegt ist, dass es ohne einen Vorsteuerdruck (pVST) einen vorgegebenen Volumenstrom (QK1) liefert, indem ein Ventilschieber (154) des Steuerventils (142) durch eine Rückstellfeder in eine obere Endstellung geschoben wird, und wenigstens ein zweites eigenständiges, ebenfalls hydraulisch vorgesteuertes Steuerventil (170) so ausgelegt ist, dass es in einem vorgegebenen Bereich (152) des variablen Vorsteuerdrucks (pVST) aktiviert wird, **dadurch gekennzeichnet, dass** das Steuerventil (142) so ausgebildet ist, dass in der oberen Endstellung des Ventilschiebers (154) des Steuerventils (142) der Volumenstrom (QK1) über eine Konstantblende (148) zur Kupplung (146) geleitet wird, wobei dieses erste Steuerventil (142) bei einer kontinuierlichen Erhöhung des variablen Vorsteuerdrucks (pVST) den Volumenstrom (QK1) über einen unteren Vorsteuerdruckbereich (152) konstant hält, und das zweite Steuerventil (170) so ausgebildet ist, dass dieses in dem unteren Vorsteuerdruckbereich (152) bei Erreichen eines Vorsteuerdruck-Grenzwertes (PX), welcher die obere Grenze des unteren Vorsteuerdruckbereiches (152) darstellt, in einem Schaltpunkt (P1) aktiviert wird, und eine andere Vorrichtung (171) ein- oder ausschaltet, wobei der konstante Volumenstrombereich (QK1) über den Schaltpunkt (P1) des zweiten Steuerventils (170) hinausgeht, und wobei bei einer weiteren Steigerung des Vorsteuerdrucks (pVST) das Steuerventil (142) eine solche Stellung einnimmt, in welcher nur noch ein Volumenstrom, der durch die Spaltleckagen am Steuerventil (142) bedingt ist, zur Kupplung (146) fließt, so dass der Volumenstrom auf einen minimalen Volumenstrom (QK2) reduziert wird.

2. Hydraulische Steuerungsanordnung nach Anspruch 1, **dadurch gekennzeichnet, dass** der Bereich des minimalen Volumenstroms (QK2) durch eine Variation der Überdeckungsverhältnisse am Ventilschieber (154) des Steuerventils (142) in seiner Breite über einen bestimmten Vorsteuerdruckbereich variierbar ist.

3. Hydraulische Steuerungsanordnung nach Anspruch 2, **dadurch gekennzeichnet, dass** das Steuerventil (142) derart ausgebildet ist, dass bei einem weiteren Anstieg des Vorsteuerdrucks (pVST) die Öffnung zu einer Hauptleitung (156) zur Versorgung der Kupplung (146) geöffnet und ein variabler Volumenstrom (QK) zur Kupplung (146) kontinuierlich geregelt wird.

4. Hydraulische Steuerungsanordnung nach einem der Ansprüche 1 bis 3, **dadurch gekennzeichnet, dass** dem Steuerventil (158) ein Fluidkühler (168) vorgeschaltet ist und dass das Steuerventil um eine weitere Steuerkante (164) erweitert ist, über die ein Fluidvolumenstrom (QS) über einen Bypass in Richtung eines Vorratstanks (166) leitbar ist, so dass der Fluidkühler (168) einen vorgegebenen Mindestdurchsatz über alle Betriebsbereiche des Steuerventils (158) hat.

5. Hydraulische Steuerungsanordnung nach Anspruch 4, **dadurch gekennzeichnet, dass** in einer Fluidversorgungsleitung des ersten Steuerventils (158) der Fluidkühler (168) angeordnet ist, und dass das erste Steuerventil (158) so ausgelegt ist, dass es bei fehlendem Vorsteuerdruck (pVST) einen vorgegebenen Fluidvolumenstrom (QS) über einen Bypass zu einem Fluid-Vorratstank (166) aufrechterhält, der bei zunehmendem Vorsteuerdruck (pVST) kontinuierlich abnimmt.

6. Hydraulische Steuerungsanordnung nach einem der Ansprüche 1 bis 5, **dadurch gekennzeichnet, dass** das zweite Steuerventil (170) in einem Anfangsbereich (152) des Vorsteuerdruckbereichs des ersten Steuerventils (142) aktiviert wird.

7. Hydraulische Steuerungsanordnung nach einem der Ansprüche 1 bis 6, **dadurch gekennzeichnet, dass** das zweite Steuerventil (170) zum Aktivieren eines Notbetriebs des Verbrauchers (146, 162) oder einer anderen Vorrichtung (171) verwendet wird.

## Claims

1. Hydraulic control arrangement for controlling a variable fluid volume flow to a consumer formed as a clutch (146), with a hydraulically pilot-controlled control valve (142), which is connected to a fluid supply (144) and, as a first, independent control valve (142), is designed such that, without a pilot control pressure (pVST), it delivers a predetermined volume flow (QK1) by a valve slide (154) of the control valve (142) being pushed by a return spring into an upper end position, and at least one second independent, likewise hydraulically pilot-controlled, control valve (170) is designed such that it is activated in a predetermined range (152) of the variable pilot control pressure (pVST), **characterized in that** the control valve (142) is formed such that, in the upper end position of the valve slide (154) of the control valve (142), the volume flow (QK1) is directed to the clutch (146) via an unchanging diaphragm (148), this first control valve (142) keeping the volume flow (QK1) constant over a lower pilot-control pressure range (152) when there is a continuous increase in the variable pilot control pressure (pVST), and the second control valve (170) is formed such that it is activated in the lower pilot-control pressure range (152) on reaching a pilot-control pressure limit value (PX), which represents the upper limit of the lower pilot-control pressure range (152), at a switching point (P1), and switches another device (171) on and off, the constant volume flow range (QK1) going beyond the switching point (P1) of the second control valve (170), and, when there is a further increase in the pilot control pressure (pVST), the control valve (142) assuming such a position in which only a volume flow caused by the leakages through the gap at the control valve (142) flows to the clutch (146), so that the volume flow is reduced to a minimum volume flow (QK2).

2. Hydraulic control arrangement according to Claim 1, **characterized in that** the range of the minimum volume flow (QK2) can be varied in its extent over a certain pilot control pressure range by varying the overlapping ratios at the valve slide (154) of the control valve (142).

3. Hydraulic control arrangement according to Claim 2, **characterized in that** the control valve (142) is formed in such a way that, when there is a further rise in the pilot control pressure (pVST), the opening to a main line (156) for supplying the clutch (146) is opened and a variable volume flow (QK) to the clutch (146) is continuously controlled.

4. Hydraulic control arrangement according to one of Claims 1 to 3, **characterized in that** the control valve (158) is preceded by a fluid cooler (168) and **in that** the control valve is extended by a further control edge (164), by way of which a fluid volume flow (QS) can be directed via a bypass in the direction of a storage tank (166), so that the fluid cooler (168) has a predetermined minimum throughput over all the operating ranges of the control valve (158).

5. Hydraulic control arrangement according to Claim 4, **characterized in that** the fluid cooler (168) is arranged in a fluid supply line of the first control valve (158), and **in that** the first control valve (158) is designed such that, when there is no pilot control pressure (pVST), it maintains a predetermined fluid volume flow (QS) via a bypass to a fluid storage tank (166), which decreases continuously with increasing pilot control pressure (pVST).

6. Hydraulic control arrangement according to one of Claims 1 to 5, **characterized in that** the second control valve (170) is activated in an initial region (152) of the pilot-control pressure range of the first control valve (142).

7. Hydraulic control arrangement according to one of Claims 1 to 6, **characterized in that** the second control valve (170) is used for activating an emergency operating mode of the consumer (146, 162) or of another device (171).

## Revendications

1. Dispositif de commande hydraulique destiné à commander un flux volumique variable de fluide acheminé à un consommateur réalisé sous forme d'embrayage (146), comprenant une soupape de commande (142) à commande pilote hydraulique, raccordée à une alimentation fluidique (144), qui est conçue en tant que première soupape de commande autonome (142) de telle sorte qu'elle fournisse un flux volumique prédéfini (QK1) sans pression de commande pilote (pVST), en ce qu'un coulisseau de soupape (154) de la soupape de commande (142) est poussé par un ressort de rappel dans une position d'extrémité supérieure, et au moins une deuxième soupape de commande (170) autonome, également à commande pilote hydraulique, est conçue de telle sorte qu'elle soit activée dans une plage prédéfinie (152) de la pression de commande pilote variable (pVST), **caractérisé en ce que** la soupape de commande (142) est réalisée de telle sorte que dans la position d'extrémité supérieure du coulisseau de soupape (154) de la soupape de commande (142), le flux volumique (QK1) soit guidé par le biais d'un diaphragme constant (148) jusqu'à l'embrayage (146), cette première soupape de commande (142), en cas d'augmentation continue de la pression de commande pilote variable (pVST) maintenant constant le flux volumique (QK1) sur une plage inférieure de pression de commande pilote (152), et **en ce que** la deuxième soupape de commande (170) est réalisée de telle sorte que dans la plage de pression de commande pilote inférieure (152), à l'obtention d'une valeur limite de pression de commande pilote (PX), qui constitue la limite supérieure de la plage de pression de commande pilote inférieure (152), celle-ci soit activée en un point de commutation (P1), et connecte ou déconnecte un autre dispositif (171), la plage de flux volumique constante (QK1) dépassant le point de commutation (P1) de la deuxième soupape de commande (170), et dans le cas d'une augmentation supplémentaire de la pression de commande pilote (pVST), la soupape de commande (142) adoptant une position dans laquelle il ne s'écoule vers l'embrayage (146) plus qu'un flux volumique causé par les fuites de fente au niveau de la soupape de commande (142), de telle sorte que le flux volumique est réduit à un flux volumique minimal (QK2).

2. Dispositif de commande hydraulique selon la revendication 1, **caractérisé en ce que** la plage du flux volumique minimal (QK2) peut être modifiée en largeur sur une plage de pression de commande pilote déterminée par une variation des rapports de recouvrement au niveau du coulisseau de soupape (154) de la soupape de commande (142).

3. Dispositif de commande hydraulique selon la revendication 2, **caractérisé en ce que** la soupape de commande (142) est réalisée de telle sorte que dans le cas d'une augmentation supplémentaire de la pression de commande pilote (pVST), l'ouverture soit ouverte vers une conduite principale (156) pour l'alimentation de l'embrayage (146) et qu'un flux volumique variable (QK) soit régulé en continu vers l'embrayage (146).

4. Dispositif de commande hydraulique selon l'une quelconque des revendications 1 à 3, **caractérisé en ce qu'**un refroidisseur de fluide (168) est monté en amont de la soupape de commande (158) et **en ce que** la soupape de commande est élargie d'une arête de commande supplémentaire (164), par le biais de laquelle un flux volumique de fluide (QS) peut être conduit par le biais d'une dérivation dans la direction d'un réservoir de stockage (166), de sorte que le refroidisseur de fluide (168) ait un débit minimal prédéfini sur toutes les plages de fonctionnement de la soupape de commande (158).

5. Dispositif de commande hydraulique selon la revendication 4, **caractérisé en ce que** le refroidisseur de fluide (168) est disposé dans une conduite d'alimentation en fluide de la première soupape de commande (158), et **en ce que** la première soupape de commande (158) est conçue de telle sorte qu'elle maintienne, en cas d'absence de pression de commande pilote (pVST), un flux volumique de fluide prédéfini (QS) par le biais d'une dérivation allant à un réservoir de stockage de fluide (166), lequel flux volumique de fluide diminue en continu en cas d'augmentation de la pression de commande pilote (pVST).

6. Dispositif de commande hydraulique selon l'une quelconque des revendications 1 à 5, **caractérisé en ce que** la deuxième soupape de commande (170) est activée dans une plage initiale (152) de la plage de pression de commande pilote de la première soupape de commande (142).

7. Dispositif de commande hydraulique selon l'une quelconque des revendications 1 à 6, **caractérisé en ce que** la deuxième soupape de commande (170) est utilisée pour activer un fonctionnement de secours du consommateur (146, 162) ou d'un autre dispositif (171).
